(19) Europäisches Patentamt
European Patent Office
Office européen des brevets

(11) EP 2 199 949 A1

(12) EUROPEAN PATENT APPLICATION

(43) Date of publication:
23.06.2010 Bulletin 2010/25

(51) Int Cl.:
G06K 9/00 (2006.01)        G06F 3/048 (2006.01)

(21) Application number: 08254108.7

(22) Date of filing: 22.12.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: BRITISH TELECOMMUNICATIONS
public limited company
London
EC1A 7AJ (GB)

(72) Inventor: **The designation of the inventor has not
yet been filed**

(74) Representative: **Lloyd, Barry George William et al
BT Group Legal
Intellectual Property Department - PP C5A
BT Centre
81 Newgate Street
London
EC1A 7AJ (GB)**

(54) **Viewpoint determination**

(57)     A human user places a hand upon a display area 1. The area is scanned to generate an image of or including the user's fingertips. The positions of the fingertips are then determined and used to generate, from the positions of a plurality of fingertips, the direction of a vector pointing in the general direction of the user's wrist. This may be used to control the orientation of the display

Figure 2a

Figure 2b

Figure 2c

**Description**

This invention concerns a method of determining the position of a human user. One possible use of this is in for orientating content towards a viewer, by automatically estimating their attentive viewing position.

The ever falling cost of high quality display technology is enabling displays to be integrated into an ever wider set of devices and surfaces. A modem living-room may now contain not only a highly capable large display television set, but also the screens of mobile phones, media players, computers and digital picture frames. In public spaces screens are to be found in shopping isles, window displays and public information systems.

There are an increasing number of displays which are statically mounted in a space around which viewers are moving dynamically. Let us call these Mural Displays. Examples are adverting displays in a public space and a digital photo-frame in the home or office. This is in contrast to the laptop, desktop or television screens where the people can be expected to be at a relatively predictable viewing-distance that is generally unchanging.

Content design for Mural Displays is similar to the production of posters in advertising and artworks for gallery walls. Where large imagery and text attracts a viewer forward towards a distance where the detail becomes apparent. However, this does not exploit the digital medium.

In addition to the rise of Mural Displays and the uncertainty of viewing-distance, it is increasingly the case that viewing-orientation is unknown. Increasing research and development effort is concentrated on table-top displays, for instance the Microsoft Surface platform (see http://www.microsoft.com/surface/). Horizontal displays, such as these, may be approached from any side and may typically used by multiple simultaneous users. Similarly displays on tablet computers (see http://www.motioncomputing.com/) are naturally turned by the user to suit the content displayed.

Content design for horizontal displays may be informed by board game design, where typically multiple players are positioned around a shared playing space. Playing-cards are often designed with symmetry to facilitate easy reading.

According to the present invention there is provided a method of determining the position of a human user comprising;

(a) scanning an area upon which the user may place a hand, to generate an image of or including the user's fingertips;

(b) determining the positions of the fingertips;

(c) generating, from the positions of a plurality of fingertips, the direction of a vector pointing in the general direction of the user's wrist.

Other aspects of the invention are defined in the claims.

Once the point-of-view of a user has been determined, then, if desired, content (principally visual media) can be orientated and adapted for them, so as to make it legible and possibly providing a dynamic experience as they move around the display.

One embodiment of the invention will now be described, by way of example, with reference to the accompanying drawings.

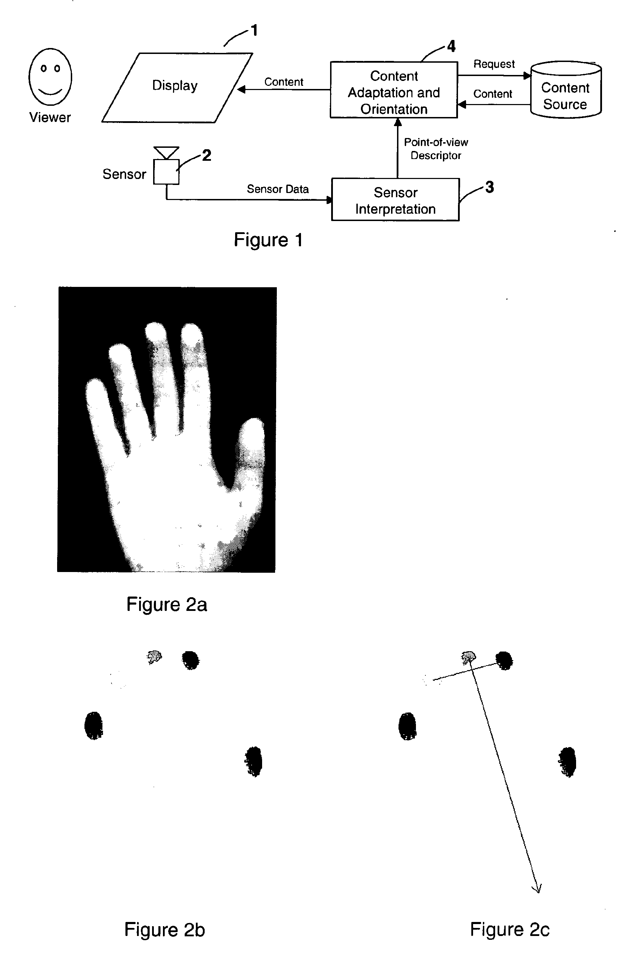

Figure 1 illustrates the overall architecture of a system by which point-of-view can be determined and used to orientate and adapt content. The system has a horizontal display 1. More particularly, this example uses a multi-touch horizontal table display, which uses the appearance of the user's finger to determine the likely position of the torso and head of the user. Thus, the system has a sensor 2 and an interpretation processor 3. We prefer to use a sensor using the frustrated total internal reflection technique as described, for example, by Han (Jefferson Y. Han; "Low-cost multi-touch sensing through frustrated total internal reflection", Proceedings of the 18th annual ACM symposium on User interface software and technology, Seattle, WA, USA, 2005, Pages 115 - 118). This produces a video image of the fingertips which is then processed by the processor 3 as will be described in detail below. Other systems for observing fingertip positions may however be used instead; for example the Apple iPhone creates data from capacitive sensors that might be used to determine fingertip positions for subsequent analysis.

The purpose of this analysis is to produce a "point-of-view descriptor" from the sensor data. This descriptor will typically describe the position of the viewer, with respect to the position and orientation of the display. This may simply be a single angle indicating the direction of the user in relation to the display.

Once the user position has been determined then the content and/or orientation of the display may be adjusted by a content/orientation processor 4. This may be accomplished by well-known affine transformations (scaling, rotation and translation) of the images or text. This requires that the observations from the sensor match or are transformed into the coordinate system of the display, also well known. Typically this will mean that the sensor is placed coincidently with the display. Other more dynamic adaptations of the content are known from Agamanolis, S. Isis, Cabbage, and Viper: New Tools and Strategies for Designing Responsive Media, PhD thesis (June 2001) (at http://web.media.mit.edu/~vmb/papers/agamanolisphd.pdf). The display could be rotated so that the vertical direction of the displayed image points in a direction corresponding to the angle found.. If desired however, the orientation could be quantised - for example a display on a square table could be constrained to rotate in steps of 90 degrees.

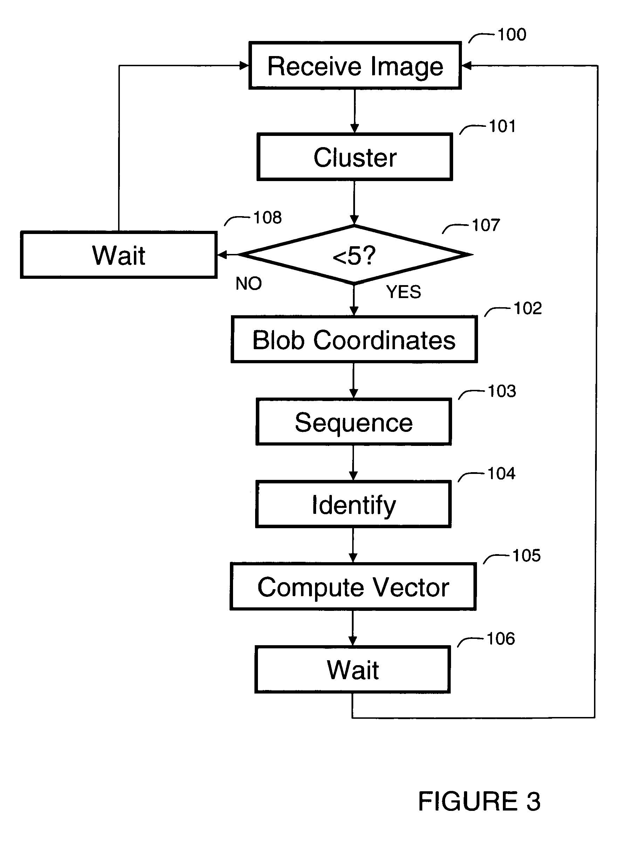

We turn now to the details of the processing performed by the interpretation processor 3 with reference to sample images shown in Figure 2 and the flowchart of Figure 3. The video signal output from the sensor 2 consists of a series of images: an example of one is shown in Figure 2a. The fingers of the hand are observed to be the brightest blobs in the image. Using a well known thresholding operation and connected component analysis each finger can be identified, as shown in Figure 2b. In this example we assume that only one hand is present. Thus, we expect that five blobs will be visible in the thresholded image of Figure 2b. In order to achieve this in the presence of noise it may be necessary (Step 101. of the flowchart) to remove excessively small blobs(e.g. by to adjusting the threshold level, or measuring the blob sizes and eliminating the smaller ones) and/or to employ clustering techniques. At the same time one might also filter out excessively large objects; this can be useful in cases where the soft-part of the hand at the base of the palm touches the surface of the display. Measures for dealing with the situation where fewer than five fingers are found will be discussed presently. Note that, in this specification, the terms finger and fingertip are used to include also the thumb and its tip, respectively.

In Step 102, the centroid of each blob is determined, so that the position of each fingertip is represented by coordinates in some suitable coordinate system, typically x,y. So for example if there are five blobs $B_0 ... B_4$, then the coordinates would be $x_0,y_0$; $x_1,y_1$; ... $x_4,y_4$; it is then necessary to determine the order of the fingertips: this may be accomplished by expressing the fingertip positions in cylindrical polar coordinates $r_i, \theta_i$, referenced to the overall centroid of the fingertips $x_c,y_c$., i.e.

$$r_i, \theta_i = \sqrt{(x_i - x_c)^2 + (y_i - y_c)^2}, \arctan\left\{\frac{(y_i - y_c)}{(x_i - x_c)}\right\}$$

where

$$x_c = \frac{1}{5}\sum_{j=0}^{4} x_j \ \text{ and } \ y_c = \frac{1}{5}\sum_{j=0}^{4} y_j$$

Note that $\theta$ is measured anticlockwise and that it is not actually necessary to calculate $r_i$.

The blobs are then (Step 103) renumbered in a cyclic sequence, that is to say, in ascending order of $\theta$. Thus, the blob with the smallest value of $\theta$ is labelled $B'_0$, the next $B'_1$, up to $B_4$ with the largest value of $\theta$. The x,y coordinates reference to this new indexing system are denoted by $x'_k,y'_k$, so that if for example blob $B_3$ at coordinates $x_3,y_3$ has the smallest value of $\theta$ then after renaming it becomes blob $B'_0$ with coordinates $x'_0,y'_0$. where $x'_0,y'_0 \equiv x_3,y_3$. In order (Step 104) to identify which finger is which, we assume that if we consider the distance between each fingertip and the next in cyclic sequence, then the largest such distance corresponds to the distance between the little finger and thumb. Thus, if

$$k_{LT} = \arg\left\{Max_{k=0}^{4}\left[\sqrt{(x_{(k+1)\mod 5} - x_k)^2 + (y_{(k+1)\mod 5} - y_k)^2}\right]\right\}$$

Then blobs $B'_{k_{LT}}$ and $B'_{(k_{LT}+1)\mod 5}$ correspond to the little finger and thumb, or *vice versa.* It follows that the middle finger corresponds to blob $B'_{(k_{LT}+3)\mod 5}$.

Note: if tracking is to be invoked later, as described below, the five sets of coordinates x',y' and the identifying index $k_{LT}$ can be stored for future use.

By finding the middle three fingers a vector towards the likely direction/position of the viewer can be determined. Specifically, (Step 105) a vector is calculated between the index and ring fingers, then the vector that passes through the middle finger perpendicularly to the first vector is calculated. In the above notation, the middle finger corresponds to blob $B'_{(k_{LT}+3)\mod 5}$ and its two neighbours are $B'_{(k_{LT}+2)\mod 5}$ and $B'_{(k_{LT}+4)\mod 5}$. This is shown in Figure 2c, where the line is shown and points to the user's wrist. Note that the arrow head is on the same side of the line joining the two adjacent fingers as is the centroid $x_c,y_c$.

Once the desired vector has been obtained, it is passed to the Content adaptation/orientation processing 4.

The interpretation process then waits (106) for a desired interval, and the process is repeated.

The size of the appearance of the hand may be used to determine "arms length" and therefore provide give an estimate of viewing distance.

In the event that four or fewer fingertips, are located (107), we prefer, at least on the first iteration the process simply waits (108) for the next image, and then process that. Alternatively (or perhaps after a timeout period) it is possible to proceed, albeit with less accurate results, to process the data in respect of four, or even three blobs. Assuming that the blobs follow a path with a consistent direction of curvature, one then constructs a vector pointing towards the centre of curvature. In the case of three fingertips, the same algorithm could be used as described above.

In the case of subsequent iterations, when fewer than five fingers are found, a modified version proceeds by comparing the new image with the previous image (or, in order to limit cumulative errors, the most recent image found to contain five fingertips- assuming that it is does not exceed a maximum age). First, the new image is processed as in Step 101 to obtain the coordinates of the centroids of the fingertips. These are then compared with the fingertip coordinates of the earlier image, and each new fingertip is matched to the nearest of the earlier sets of coordinates. One method of doing this is to consider, for each possible mapping of the new coordinates to the previous, the sum of the squares of exact distance between the new and old (corrected for any gross movement), and choose the mapping that gives the smallest sum. In the case of four fingertips there are 120 such mappings, or, in the case of three, 60. The correction for gross movement involves determination of the vector displacement between the four (or n) new fingertip positions and the four earlier positions chosen in the particular mapping. This could be the average displacement vector, or obtained by finding a the smallest bounding box containing the blobs, then one of the corners (e.g. top left) could be used to remove an offset from each dataset and align them before comparison. Alternatively a translation/rotation invariant descriptor could be used, such as the cylindrical polar coordinates that we have suggested Similarly the edges of a convex hull could be compared.

An alternative is do the same with the image data rather than the coordinates, fitting the current observation with previous examples. This may accomplished by template matching. This may be done either on the binary thresholded image or on the grey-level image (where more detail of the hand would be available - that is to say, the image is extracted before the filtering step 101 so that visible parts such as fingers or parts of the palm may remain, as in Figure 2a). The template may have to be iteratively deformed (e.g. by an affine transform) to compensate for rotations etc. The best previous observation fitted to the current data would then be processed as previously described for the five finger case. Our preferred method, using the grey-level image, is as follows:

1. An observation is made of all five fingers from which the vector estimating the direction of the viewer can be made (which is with respect to the centre finger) as we have described. At this point from the original pre-processed grey-level image a rectangle template is created, by cropping the image to contain all five finger tips and elongated in one direction to include the palm of the hand. The result is an image in which the structure of the full hand is visible, with the metadata of the location of each finger and vector describing the user's position with respect to the centre finger.

2. If all 5 (or n) fingers cannot be identified then a search area is defined around fingers that can, then the template previously created is used to find a best match in that area of the new pre-processed input image. Template/pattern matching is a well defined process and may include distortions of the template (e.g. scaling) to find a good match. If a sufficiently good match is found the template's metadata (finger positions & viewing vector) are transposed onto the new input image (they may need to be transformed to account for any distortions of the template in matching). This will result in a vector estimating the viewing position for the new input image.

Once this assignment has been made, then we know which fingertip or fingertips are missing. If it is established that the middle three fingertips are present, then we can proceed as before. Otherwise there are two possible strategies:

(a) to construct the desired vector based on the positions of the fingertips that are actually present (providing there are at least three); or

(b) to estimate the position of the missing fingertip(s) and then proceed as for five; this is possible as long as at least two fingertips are found.

Option (a) proceeds as in the "first iteration" case, as discussed above, the only difference being that because we know which finger is which, we may apply an angular correction to the vector obtained, based on empirical data. Note that even if option (a) is used to estimate the vector, it may still be desirable to estimate the position of the missing fingertips, to provide a reference image for tracking on the next iteration.

In option (b), the procedure is to take five points whose mutual positions correspond to the coordinates obtained from the earlier image, and apply a transformation to this pattern to obtain the best match (e.g. minimising the sum of Euclidean distances) with the new pattern. This requires a rotation and a scaling

- for two fingertips only, a single linear scaling;

- for three fingertips, a two-dimensional linear scaling;

- for four fingertips, ignore the thumb or little finger and proceed as for three (note that we have not at this stage made any provision for determining whether the left hand or right hand is being observed and thus, one does not know which is the little finger and which is the thumb. If both are present, the one to be disregarded may be chosen at random.

Once the optimum rotation and scaling has been established, the coordinates of the missing fingertip may be estimated by applying the same rotation and scaling to the coordinated of the corresponding fingertip in the earlier image.

It is likely that this will be used as an explicit gesture at the start of the interaction, by laying the hand on the display, to orientate the information towards the viewer. However, it may be made implicitly by watching the interaction over time.

The current state of the art for multi-touch finger gestures includes two-finger pitching as a method of scaling content, two-fingered dragging to navigate a document and two-fingered twisting to rotate content. Prime examples of these are to be found in Han (Han, J. Y. "Low-cost multi-touch sensing through frustrated total internal reflection", Proceedings of the 18th annual ACM symposium on User interface software and technology, October 2005) and Apple's iPod Touch, iPhone and MacBook Air. Apple's "Mode-based graphical user interfaces for touch sensitive input devices" U.S. patent application 2006/0026535 covers aspects of this.

**Claims**

1. A method of determining the position of a human user comprising;

   (a) scanning an area upon which the user may place a hand, to generate an image of or including the user's fingertips;
   (b) determining the positions of the fingertips;
   (c) generating, from the positions of a plurality of fingertips, the direction of a vector pointing in the general direction of the user's wrist.

2. A method according to claim 1, including identifying the middle three fingers, and determining the vector direction from the coordinates of those three fingers.

3. A method according to claim 1, in which in the event that a scan, subsequent to an earlier scan that identifies five fingertips, identifies fewer than five fingertips, fingertips in the later scan are identified by a process of matching the coordinates of the later scan to those of the earlier.

4. A method according to claim 3, including estimating coordinates of a missing fingertip by determining a transformation to be applied to coordinates of the corresponding fingertip in the earlier scan.

5. A method according to claim 1, in which in the event that a scan, subsequent to an earlier scan that identifies five fingertips, identifies fewer than five fingertips, fingertips in the later scan are identified by a process of matching the image of the later scan to those of the earlier.

6. A method according to any one of the preceding claims including repeating the determination of the vector direction.

7. A method according to any one of the preceding claims including using the vector direction to control the orientation of a visual display to be viewed by the user.

Figure 1

Figure 2a

Figure 2b

Figure 2c

Receive Image ⌐100

Cluster ⌐101

Wait ⌐108    <5? ⌐107

NO    YES

Blob Coordinates ⌐102

Sequence ⌐103

Identify ⌐104

Compute Vector ⌐105

Wait ⌐106

FIGURE 3

Europäisches
Patentamt

European
Patent Office

Office européen
des brevets

## EUROPEAN SEARCH REPORT

Application Number

EP 08 25 4108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 811 360 A (MATSUSHITA ELECTRIC IND CO LTD [JP]) 25 July 2007 (2007-07-25) | 1,2,6 | INV. G06K9/00 G06F3/048 |
| Y | * abstract; figures 2-4,11-15 * <br> * paragraph [0097] * <br> ----- | 7 | |
| X | WO 2007/123557 A (AWARE INC; HILLS L SCOTT [US]; MAURER JAMES M [US]) 1 November 2007 (2007-11-01) | 1,2,6 | |
| Y | * abstract; figure 11 * <br> * paragraph [0074] - paragraph [0075] * <br> ----- | 7 | |
| Y | HIDEKI KOIKE ET AL: "Information Layout and Interaction on Virtual and Real Rotary Tables" HORIZONTAL INTERACTIVE HUMAN-COMPUTER SYSTEMS, 2007. TABLETOP '07. SECOND ANNUAL IEEE INTERNATIONAL WORKSHOP ON, IEEE, PISCATAWAY, NJ, USA, 1 October 2007 (2007-10-01), pages 95-102, XP031161567 ISBN: 978-0-7695-2013-1 * abstract; figure 4 * * sec. 4.3 * * page 97, right-hand column * ----- | 7 | |
| A | US 2006/125803 A1 (WESTERMAN WAYNE [US] ET AL) 15 June 2006 (2006-06-15) * abstract; figures 1-6 * * paragraph [0008] * ----- | 1-7 | |
| A | EP 1 643 414 A (NIPPON ELECTRIC CO [JP]) 5 April 2006 (2006-04-05) * abstract; figures 5,6 * * paragraph [0070] - paragraph [0075] * * paragraph [0098] - paragraph [0113] * ----- | 1-7 | |

TECHNICAL FIELDS SEARCHED (IPC)

G06K
G06F
G06T

The present search report has been drawn up for all claims

| Place of search | Date of completion of the search | Examiner |
|---|---|---|
| Munich | 18 March 2009 | Müller, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 25 4108

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2009

| Patent document cited in search report | | Publication date | Patent family member(s) | | Publication date |
|---|---|---|---|---|---|
| EP 1811360 | A | 25-07-2007 | CN 101010661 A<br>JP 2006072854 A<br>WO 2006027924 A1<br>US 2007262965 A1 | | 01-08-2007<br>16-03-2006<br>16-03-2006<br>15-11-2007 |
| WO 2007123557 | A | 01-11-2007 | EP 2011057 A1 | | 07-01-2009 |
| US 2006125803 | A1 | 15-06-2006 | NONE | | |
| EP 1643414 | A | 05-04-2006 | DE 602005001099 T2<br>JP 2006099326 A<br>US 2006067566 A1 | | 10-01-2008<br>13-04-2006<br>30-03-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060026535 A

**Non-patent literature cited in the description**

- **Jefferson Y. Han.** Low-cost multi-touch sensing through frustrated total internal reflection. *Proceedings of the 18th annual ACM symposium on User interface software and technology,* 2005, 115-118

- **Agamanolis ; S. Isis ; Cabbage ; Viper.** New Tools and Strategies for Designing Responsive Media. *PhD thesis,* June 2001
- **Han, J. Y.** Low-cost multi-touch sensing through frustrated total internal reflection. *Proceedings of the 18th annual,* October 2005